# EUROPEAN PATENT APPLICATION

(11) **EP 4 801 113 A1**
(43) Date of publication of application: **02.09.2026**
(21) Application number: 23956822.3
(22) Date of filing: 26.10.2023
(51) Int. Cl.: H04W 36/36, H04W 24/10

(54) **TERMINAL**

(71) Applicant: NTT DOCOMO, INC., Tokyo 100-6150 (JP)
(72) Inventor: MIN Tianyang, Tokyo 100-6150 (JP); SAGAE Yuta, Tokyo 100-6150 (JP); SHIMODAIRA Hidekazu, Tokyo 100-6150 (JP); ABIKO Yuu, Tokyo 100-6150 (JP)
(74) Representative: Hoffmann Eitle
(86) International application number: PCT/JP2023/038781
(87) International publication number: WO 2025/088771

(57) **Abstract**

A terminal comprises a transmission unit that transmits a measurement report related to cell quality, and a control unit that predicts a transmission timing for transmitting the measurement report and an execution timing for executing an autonomous handover using a learning model. The control unit predicts either the transmission timing or the execution timing based on one of the transmission timing or the execution timing.

## Description

### TECHNICAL FIELD

The present disclosure relates to a terminal that executes an operation related to mobility using a learning model.

### BACKGROUND ART

The 3rd Generation Partnership Project (3GPP (registered trademark)) has specified the 5th generation mobile communication system (also referred to as 5G, New Radio (NR), or Next Generation (NG)), and is also proceeding with the specification of the next generation called Beyond 5G, 5G Evolution, or 6G.

In Release 18, the introduction of Artificial Intelligence (AI) / Machine Learning (ML) is being discussed. An AI/ML model (hereinafter also referred to as a learning model) is downloaded from a base station (hereinafter also referred to as a gNodeB or gNB) and applied to a terminal (hereinafter also referred to as User Equipment or UE).

By applying the learning model to the UE, performance improvement is expected in various areas such as Channel State Information (CSI) feedback, Beam Management (BM), positioning, mobility, network slicing, and Quality of Experience (QoE). Regarding mobility, applying a learning model for Radio Resource Management (RRM) is being studied (Non-Patent Literature 1).

### CITATION LIST

### NON-PATENT LITERATURE

Non-Patent Literature 1: "Moderator's summary for REL-19 RAN2 topic AI/ML for Air Interface SI (Mobility)", RP-232622, 3GPP TSG RAN Meeting #101, 3GPP, September 11-15, 2023

### SUMMARY OF INVENTION

By applying the learning model for RRM, the UE can calculate a predicted value of cell quality instead of actually measuring the cell quality. The predicted value of the cell quality may be, for example, a value predicted as an actual measurement value of the cell quality after t seconds. Based on the predicted value instead of the actual measurement value of the cell quality, the UE can transmit a measurement report, execute an autonomous handover (HO), and the like.

It is conceivable to predict a transmission timing of the measurement report and an execution timing of the autonomous HO using a learning model. However, it is considered that there is room for improvement in prediction utilizing a learning model, such as predicting these timings in combination instead of predicting them individually.

Therefore, the present disclosure has been made in view of such a situation, and an object of the present disclosure is to provide a terminal capable of improving prediction accuracy of a transmission timing of a measurement report or an execution timing of an autonomous HO by combining a plurality of predictions.

One aspect of the disclosure is a terminal including a transmission unit (radio signal transmission/reception unit 210) that transmits a measurement report related to cell quality, and a control unit (control unit 270) that predicts a transmission timing for transmitting the measurement report and an execution timing for executing an autonomous handover using a learning model, wherein the control unit predicts either the transmission timing or the execution timing based on one of the transmission timing or the execution timing.

### BRIEF DESCRIPTION OF DRAWINGS

[Fig. 1] Fig. 1 is an overall schematic configuration diagram of a radio communication system.
[Fig. 2] Fig. 2 is a diagram showing frequency ranges used in the radio communication system.
[Fig. 3] Fig. 3 is a diagram showing a configuration example of a radio frame, a subframe, a slot, and a symbol used in the radio communication system.
[Fig. 4] Fig. 4 is a functional block diagram of a terminal.
[Fig. 5] Fig. 5 is a functional block diagram of a base station.
[Fig. 6] Fig. 6 is a diagram showing a sequence of transmitting a measurement report using a learning model.
[Fig. 7] Fig. 7 is a diagram showing a sequence of executing an autonomous HO using a learning model.
[Fig. 8] Fig. 8 is a diagram showing an example of contents of a measurement report transmitted using a learning model.
[Fig. 9] Fig. 9 is a diagram showing an example of a hardware configuration of a base station and a terminal.
[Fig. 10] Fig. 10 is a diagram showing a configuration example of a vehicle.

### DESCRIPTION OF EMBODIMENTS

Hereinafter, embodiments will be described with reference to the drawings. Note that the same functions and configurations are denoted by the same or similar reference signs, and descriptions thereof are omitted as appropriate.

### (1) Configuration of Radio Communication System

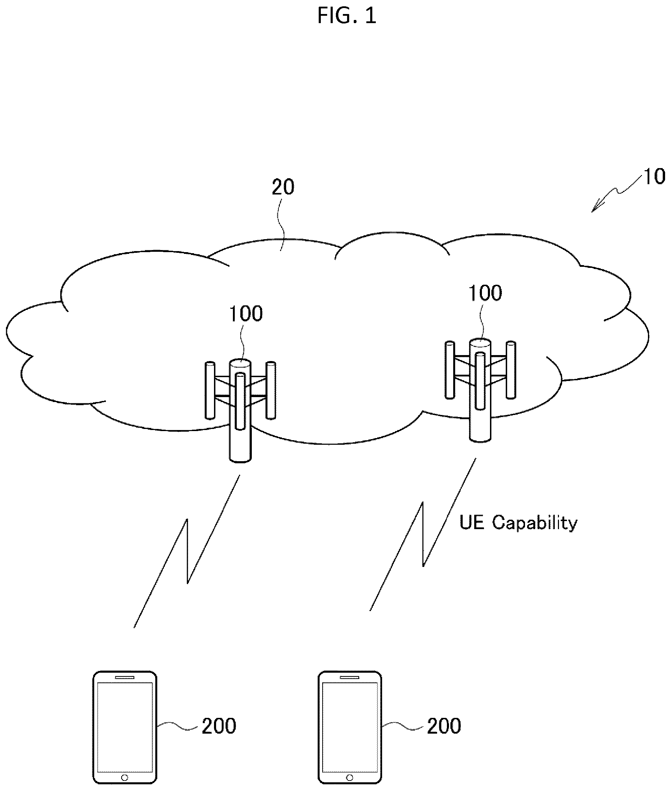

A radio communication system 10 shown in Fig. 1 is a radio communication system according to a method called 5G. On the other hand, the radio communication system 10 may be a radio communication system according to a method called Beyond 5G, 5G Evolution, or 6G.

The radio communication system 10 can support Massive Multiple-Input Multiple-Output (Massive MIMO) that generates a beam with higher directivity by controlling radio signals transmitted from a plurality of antenna elements, Carrier Aggregation (CA) that bundles and uses a plurality of Component Carriers (CCs), Dual Connectivity (DC) that performs simultaneous communication with two base stations, and the like.

As shown in Fig. 1, the radio communication system 10 includes a Next Generation-Radio Access Network (NG-RAN) 20, a base station (hereinafter also referred to as a gNodeB or gNB) 100 connected to the NG-RAN 20, and a terminal (hereinafter also referred to as User Equipment or UE) 200 that performs radio communication with the gNB 100. The NG-RAN 20 is connected to a Core Network (CN) (not shown). The NG-RAN 20 and the CN may be simply expressed as a "network". Further, the gNB 100 may be interpreted as being included in the network. Note that a specific configuration of the radio communication system 10, for example, the numbers of gNBs 100 and UEs 200, is not limited to the example shown in Fig. 1.

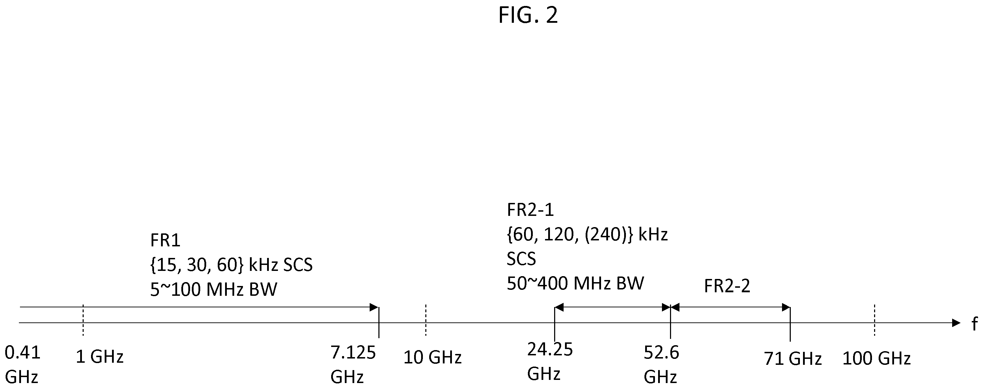

Further, the radio communication system 10 may support a plurality of Frequency Ranges (FRs). That is, as shown in Fig. 2, the radio communication system 10 may support the following FRs.
- FR1: 410 MHz to 7.125 GHz
- FR2-1: 24.25 GHz to 52.6 GHz
- FR2-2: Over 52.6 GHz to 71 GHz

In FR1, a Sub-Carrier Spacing (SCS) of 15, 30, or 60 kHz and a Bandwidth (BW) of 5 to 100 MHz may be used. In FR2-1, an SCS of 60 or 120 kHz (240 kHz may be included) and a BW of 50 to 400 MHz may be used.

In FR2-2, Cyclic Prefix-Orthogonal Frequency Division Multiplexing (CP-OFDM) or Discrete Fourier Transform-Spread-Orthogonal Frequency Division Multiplexing (DFT-S-OFDM) having a larger SCS may be applied in order to avoid an increase in phase noise.

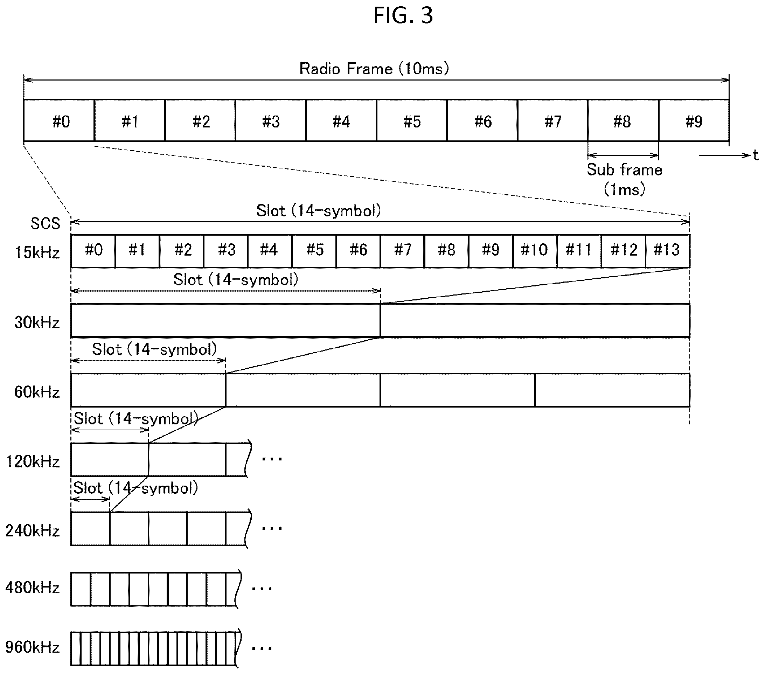

Further, as shown in Fig. 3, one slot in the radio communication system 10 is composed of 14 symbols. If this configuration is maintained, the larger (wider) the SCS is, the shorter the symbol period (and the slot period) is. Note that the SCS is not limited to the frequencies shown in Fig. 3, and may be frequencies such as 480 kHz and 960 kHz, for example.

Further, the number of symbols constituting one slot does not necessarily have to be 14 symbols, and may be, for example, 28 or 56 symbols. Furthermore, the number of slots per subframe may differ depending on the SCS.

### (2) Functional Block Configuration of Radio Communication System

### (2.1) Functional Block Configuration of Terminal

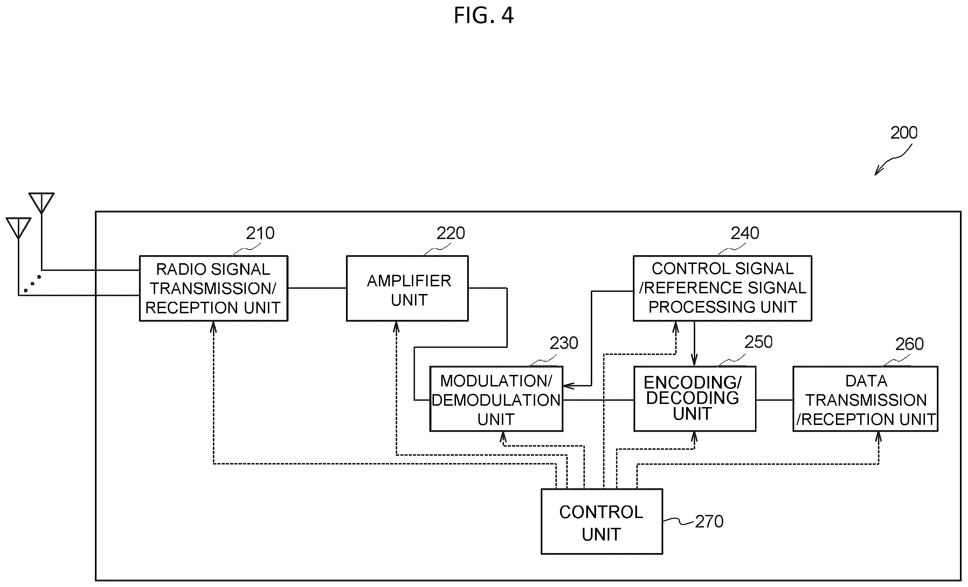

As shown in Fig. 4, the UE 200 includes a radio signal transmission/reception unit 210, an amplifier unit 220, a modulation and demodulation unit 230, a control signal/reference signal processing unit 240, an encoding/decoding unit 250, a data transmission and reception unit 260, and a control unit 270.

The radio signal transmission/reception unit 210 transmits and receives radio signals to and from the gNB 100. The radio signal transmission/reception unit 210 may constitute a transmission unit that transmits radio signals to the gNB 100 and a reception unit that receives radio signals from the gNB 100. Transmission may be read as reporting, notification, and the like. Further, reception may be read as configuration (being configured), indication (being indicated), and the like. Note that the configuration may be realized by Radio Resource Control (RRC), and the indication may be realized by a Control Element of Medium Access Control (MAC CE) or Downlink Control Information (DCI).

The radio signal transmission/reception unit 210 in the embodiment transmits a measurement report related to cell quality to the gNB 100 based on a comparison by the control unit 270 described later. Cells targeted for measurement of cell quality are, for example, a serving cell (PCell, PSCell, SpCell), a neighboring cell, and a Secondary Cell (SCell). Note that the radio signal transmission/reception unit 210 in the embodiment may transmit the measurement report related to the cell quality to the gNB 100 based on a configuration or an indication from the gNB 100.

The radio signal transmission/reception unit 210 in the embodiment may transmit the measurement report together with information related to a time or a period of a transmission timing at which the measurement report is transmitted. Note that the information related to the time of the transmission timing at which the measurement report is transmitted may be referred to as a timestamp, and the information related to the period of the transmission timing at which the measurement report is transmitted may be referred to as a time window.

The radio signal transmission/reception unit 210 in the embodiment may transmit the measurement report together with information related to a time or a period of an execution timing at which an autonomous handover (HO) is executed. Note that the information related to the time of the execution timing at which the autonomous HO is executed may be referred to as a timestamp, and the information related to the period of the execution timing at which the autonomous HO is executed may be referred to as a time window.

The radio signal transmission/reception unit 210 in the embodiment may transmit the measurement report together with at least one of location information of the UE 200, a degradation timing at which cell quality degrades, and an event condition for executing the HO, which are predicted by the control unit 270 described later using a learning model.

The radio signal transmission/reception unit 210 in the embodiment receives a threshold for executing an autonomous HO from the gNB 100. The autonomous HO is, for example, Conditional Handover (CHO), Conditional PSCell Addition/Change (CPAC) for adding/changing a Primary Secondary Cell (PSCell), or Lower layer Triggered Mobility (LTM) controlled in a lower layer (L1/L2). The threshold for executing the autonomous HO may be interpreted as being a part of an HO execution condition.

The amplifier unit 220 is composed of a Power Amplifier (PA) / a Low Noise Amplifier (LNA) and the like. The amplifier unit 220 amplifies the radio signal output from the radio signal transmission/reception unit 210. Further, the amplifier unit 220 amplifies the radio signal output from the modulation and demodulation unit 230.

The modulation and demodulation unit 230 executes data modulation/demodulation, transmission power setting, resource block allocation, and the like for each predetermined communication destination (gNB 100 or another gNB). In the modulation and demodulation unit 230, CP-OFDM / DFT-S-OFDM may be applied. Further, DFT-S-OFDM may be used not only for Uplink (UL) but also for Downlink (DL).

The control signal/reference signal processing unit 240 executes processing regarding control signals transmitted and received to and from the gNB 100, for example, Radio Resource Control (RRC) signaling.

The control signal/reference signal processing unit 240 executes processing regarding reference signals transmitted and received to and from the gNB 100, for example, a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS).

Note that channels include a control channel and a data channel. The control channel includes a Physical Uplink Control Channel (PUCCH), a Physical Downlink Control Channel (PDCCH), a Physical Random Access Channel (PRACH), a Physical Broadcast Channel (PBCH), and the like. The data channel includes a Physical Uplink Shared Channel (PUSCH), a Physical Downlink Shared Channel (PDSCH), and the like.

The encoding/decoding unit 250 executes division/concatenation and coding/decoding of data included in radio signals for each predetermined communication destination (gNB 100 or another gNB).

Specifically, the encoding/decoding unit 250 decodes data output from the modulation and demodulation unit 230, and concatenates the decoded data. Further, the encoding/decoding unit 250 divides data output from the data transmission and reception unit 260 into a predetermined size, and executes coding on the divided data.

The data transmission and reception unit 260 executes assembly/disassembly of data units (Protocol Data Unit (PDU) / Service Data Unit (SDU)) constituting data, and the like between respective layers. The plurality of layers are a Medium Access Control (MAC) layer, a Radio Link Control (RLC) layer, a Packet Data Convergence Protocol (PDCP) layer, and the like. Further, the data transmission and reception unit 260 executes error correction and retransmission control of data based on Hybrid Automatic Repeat Request (HARQ).

The control unit 270 controls the UE 200. The control unit 270 controls, for example, transmission and reception of radio signals by the radio signal transmission/reception unit 210, amplification by the amplifier unit 220, data modulation/demodulation by the modulation and demodulation unit 230, signal processing by the control signal/reference signal processing unit 240, coding/decoding by the encoding/decoding unit 250, and assembly/disassembly of data units by the data transmission and reception unit 260.

The control unit 270 in the embodiment calculates a predicted value of cell quality using a learning model. Further, the control unit 270 compares the calculated predicted value with a threshold, and when the predicted value falls below (or exceeds) the threshold, determines transmission of the measurement report related to the cell quality described above. That is, the radio signal transmission/reception unit 210 transmits the measurement report related to the cell quality based on the comparison by the control unit 270.

The control unit 270 in the embodiment calculates a predicted value of cell quality using a learning model. Further, the control unit 270 compares the calculated predicted value with a threshold, and when the predicted value falls below (or exceeds) the threshold, executes an autonomous HO. Furthermore, the control unit 270 may predict an execution timing for executing the autonomous HO using a learning model. In this case, the control unit 270 may execute the autonomous HO at this execution timing.

Note that the control unit 270 in the embodiment may calculate an actual measurement value of cell quality without using a learning model, and compare it with a threshold.

The control unit 270 in the embodiment may predict both a transmission timing for transmitting the measurement report and an execution timing for executing the autonomous HO using a learning model. In this case, the control unit 270 may predict the other based on one of the transmission timing and the execution timing. Furthermore, the control unit 270 may predict the transmission timing or the execution timing based on a moving speed of the UE 200. For example, if the moving speed of the UE 200 is fast, the transmission timing or the execution timing may be advanced, and if the moving speed of the UE 200 is slow, the transmission timing or the execution timing may be delayed.

The control unit 270 in the embodiment may predict various parameters using a learning model. That is, the control unit 270 may calculate predicted values of various parameters using a learning model. The control unit 270 may predict, for example, location information of the UE 200, a degradation timing at which cell quality degrades, or an event condition for executing an autonomous HO, using a learning model.

The predicted value of cell quality (hereinafter also referred to as a predicted value) may be, for example, a value predicted as a value of the cell quality after t seconds. The value of the cell quality is, for example, Reference Signal Received Power (RSRP), Reference Signal Received Quality (RSRQ), or Signal to Interference plus Noise power Ratio (SINR). Further, the value of the cell quality may be measured in L3, or may be measured in a lower layer (L1/L2, hereinafter also referred to as L1). Therefore, the predicted value of the cell quality is, for example, a predicted value of L1/L3 RSRP, L1/L3 RSRQ, or L1/L3 SINR.

The threshold may be a threshold for determining quality of the cell quality and transmitting the measurement report. In this case, the threshold may be interpreted as being a part of an event condition for transmitting the measurement report. Further, the threshold may be a threshold for executing the autonomous HO described above.

Furthermore, in the comparison between the predicted value and the threshold, the control unit 270 in the embodiment may add an offset value to one of the predicted value and the threshold and compare them. That is, the control unit 270 may compare the predicted value + the offset value with the threshold, or may compare the predicted value with the threshold + the offset value. Thereby, the control unit 270 may determine transmission of the measurement report related to the cell quality described above when the predicted value + the offset value falls below (or exceeds) the threshold, or when the predicted value falls below (or exceeds) the threshold + the offset value.

The offset value may be a positive value or a negative value. The offset value may be a fixed value or a variable value. The offset value may be a predetermined value, or may be calculated by the control unit 270 using a learning model. Furthermore, the control unit 270 may change the offset value using a learning model. Note that the offset value in the embodiment may be expressed as AIML_offset for convenience, but is not limited to a value calculated using a learning model and may be a predetermined value.

The predicted value, the threshold, and the offset value may be one or plural, respectively. That is, as described in the section of Operation Examples, one predicted value (+ offset value) and one threshold (+ offset value) may be compared, or a plurality of predicted values (+ offset value) and a plurality of thresholds (+ offset value) may be compared.

### (2.2) Functional Block Configuration of Base Station

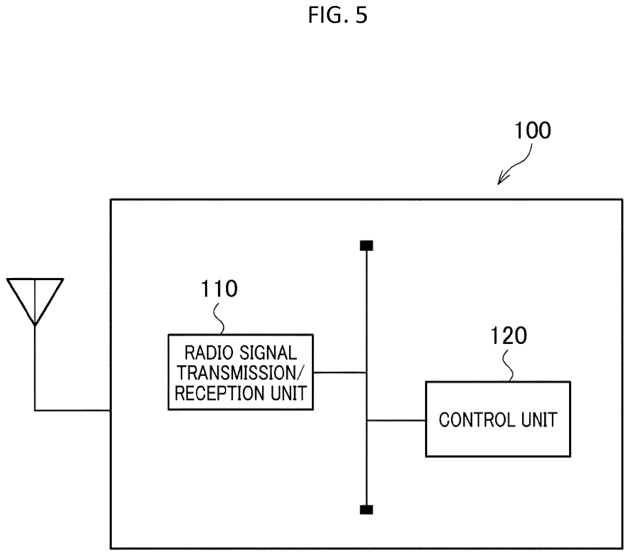

As shown in Fig. 5, the gNB 100 includes a radio signal transmission/reception unit 110 and a control unit 120.

The radio signal transmission/reception unit 110 transmits and receives radio signals to and from the UE 200. The radio signal transmission/reception unit 110 may constitute a transmission unit that transmits radio signals to the UE 200 and a reception unit that receives radio signals from the UE 200. Transmission may be read as configuration, indication, and the like. Further, reception may be read as reporting (being reported), notification (being notified), and the like. Note that the configuration may be realized by Radio Resource Control (RRC), and the indication may be realized by a Control Element of Medium Access Control (MAC CE) or Downlink Control Information (DCI).

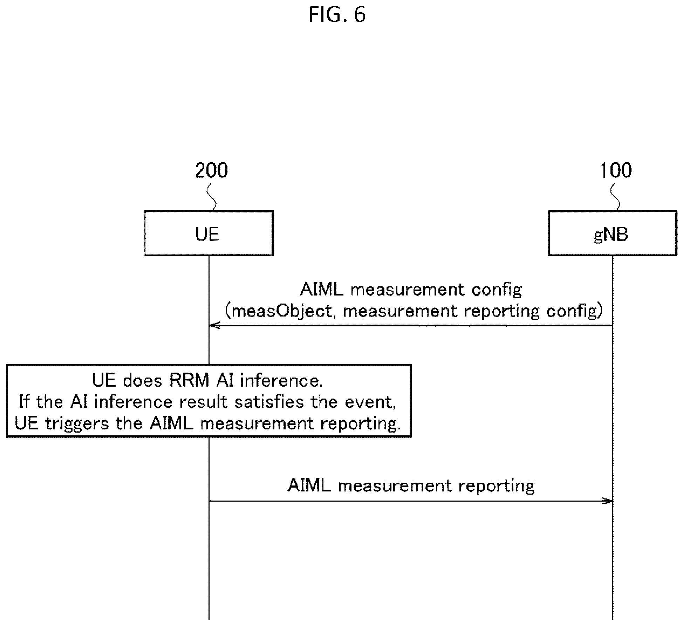

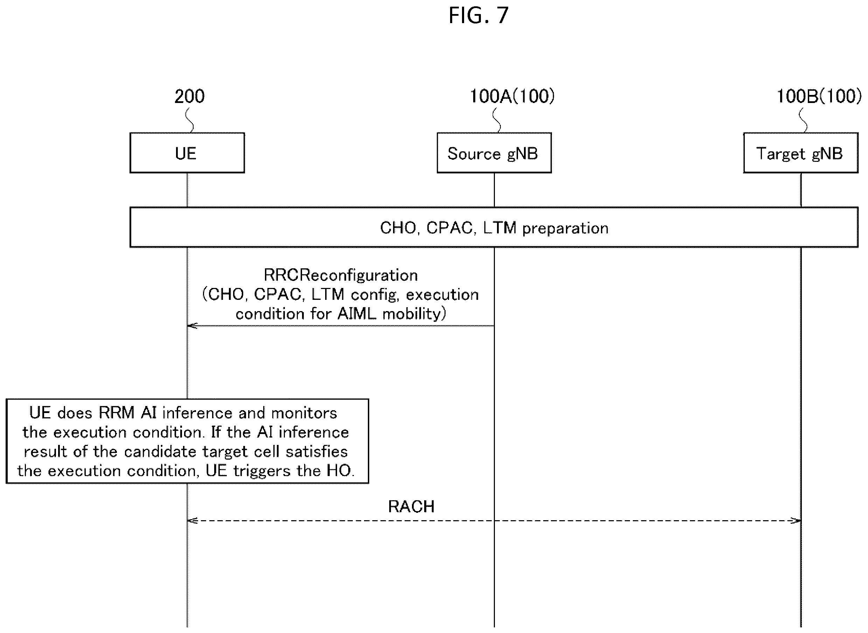

The radio signal transmission/reception unit 110 in the embodiment transmits configuration information related to measurement of cell quality (for example, a threshold for transmitting a measurement report) to the UE 200 (see Fig. 6). Further, the radio signal transmission/reception unit 110 transmits configuration information for executing an autonomous HO (for example, a threshold for executing an autonomous HO) to the UE 200 (see Fig. 7).

The control unit 120 controls the gNB 100. The control unit 120 controls, for example, transmission and reception of radio signals by the radio signal transmission/reception unit 110. Further, the control unit 120 executes scheduling for the UE 200.

Similar to the control unit 270 of the UE 200, the control unit 120 in the embodiment may perform various predictions using a learning model. Various predictions by the control unit 120 may be the same as those by the control unit 270, and detailed description thereof is omitted.

### (2.3) Architecture of Learning Model

The learning model may include the following functions as its architecture.
- Data Collection: "Data Collection" collects input data and provides it to "Model Training" described later.
- Model Training: "Model Training" executes training, validation, and testing of the learning model based on the input data, and stores the trained (validated and tested) learning model in "Model Storage" described later. Note that "Model Training" may generate performance metrics of the model as part of a test procedure of the learning model. Further, "Model Training" may perform data preparation (data preprocessing and cleaning, formatting, transformation, etc.).
- Model Storage: "Model Storage" stores the learning model.
- Model Inference: "Model Inference" executes prediction corresponding to the input data (outputs a predicted value) using the learning model stored in "Model Storage". "Model Inference" may provide the predicted value for feedback to "Model Management / Performance Monitor" described later.
- Model Management / Performance Monitor: "Model Management / Performance Monitor" executes management / performance monitoring of the learning model. "Model Management / Performance Monitor" may provide information used for training of the learning model to "Model Training" based on the predicted value.

### (3) Operation of Radio Communication System

### (3.1) Issues

### (3.1.1) Issue 1

The predicted value of the cell quality might differ for each UE due to a difference in an algorithm or an implementation method of the applied learning model. In addition, since parameters for calculating the predicted value are diverse, there is a circumstance that it is not easy to define a criterion for calculating the predicted value. Therefore, even in the same situation, there is a possibility that an operation related to mobility (for example, transmission of the measurement report or execution of the autonomous HO described above) differs for each UE. That is, there is a possibility that a UE that executes a mobility operation and a UE that does not execute the mobility operation coexist even in the same situation.

### (3.1.2) Issue 2

It is conceivable to predict the transmission timing of the measurement report and the execution timing of the autonomous HO using a learning model. However, it is considered that there is room for improvement in prediction utilizing a learning model, such as predicting these timings in combination instead of predicting them individually.

### (3.2) Operation Examples

### (3.2.1) Operation Example 1

Operation Example 1 will be described with reference to Fig. 6. The UE 200 may transmit (trigger) a measurement report when the following event conditions are satisfied. Note that since the measurement report is based on the predicted value calculated using the learning model, it may be referred to as AIML measurement reporting or AIML reporting. The predicted values of the cell quality shown below are, for example, L1/L3 RSRP, L1/L3 RSRQ, and L1/L3 SINR. AIML_offset shown below corresponds to the "offset value" described above. AIML_offset may be, for example, +X dB or -X dB.
- When the predicted value of the cell quality of the serving cell + AIML_offset exceeds a predetermined threshold
- When the predicted value of the cell quality of the serving cell + AIML_offset falls below a predetermined threshold
- When the predicted value of the cell quality of the neighboring cell + AIML_offset exceeds a predetermined threshold
- When the predicted value of the cell quality of the neighboring cell + AIML_offset falls below a predetermined threshold
- When the predicted value of the cell quality of the neighboring cell + AIML_offset is larger than the predicted value or the actual measurement value of the cell quality of the SpCell by a predetermined value or more
- When the predicted value of the cell quality of the SpCell + AIML_offset falls below a predetermined threshold (first threshold) and the predicted value of the cell quality of the neighboring cell + AIML_offset exceeds a predetermined threshold (second threshold)
- When the predicted value of the cell quality of the neighboring cell + AIML_offset is larger than the predicted value or the actual measurement value of the cell quality of the SCell by a predetermined value or more
- When the predicted value of the Inter RAT neighboring cell + AIML_offset exceeds a predetermined threshold
- When the predicted value of the cell quality of the PCell + AIML_offset falls below a predetermined threshold (first threshold) and the predicted value of the cell quality of the Inter RAT neighboring cell + AIML_offset exceeds a predetermined threshold (second threshold)

Further, the UE 200 may transmit the measurement report with a timestamp or a time window in which the event condition is satisfied. Further, in the event condition described above, not only AIML_offset but also AIML_hysteresis may be added. AIML_hysteresis may be interpreted as a hysteresis value having a smaller variation amount than the offset value described above. Further, AIML_hysteresis may be calculated by the UE 200 using a learning model, similarly to the offset value described above. Furthermore, AIML_offset may be added to the predetermined threshold instead of the predicted value, and compared. Also, similar to the predicted value, the predetermined threshold may be predicted by the UE 200 using a learning model.

Note that AIML_offset may be configured by AIML measurement config shown in Fig. 6. For example, it may be configured in measObject. Further, AIML_offset may be configured for each UE 200. AIML_offset may be associated with UE capability, and may be reported via UE capability. Furthermore, AIML_offset may take into account the possibility of changing over time. That is, the UE 200 may predict a temporal change of AIML_offset using a learning model, and change AIML_offset based on this prediction. Further, the gNB 100 may predict a temporal change of AIML_offset using a learning model, and configure a change pattern of AIML_offset to the UE 200 based on this prediction.

### (3.2.2) Operation Example 2

Operation Example 2 will be described with reference to Fig. 7. In Fig. 7, the gNB 100 forming a source cell is referred to as a gNB 100A, and the gNB 100 forming a target cell is referred to as a gNB 100B. The UE 200 may execute an autonomous HO (for example, CHO, CPAC, LTM) when the following HO execution conditions are satisfied. Note that the autonomous HO may be a RACH based HO as shown in Fig. 7, or may be a RACH less HO. The predicted values of the cell quality shown below are, for example, L1/L3 RSRP, L1/L3 RSRQ, and L1/L3 SINR. AIML_offset shown below corresponds to the "offset value" described above. AIML_offset may be, for example, +X dB or -X dB.
- When the predicted value of the cell quality of the neighboring cell + AIML_offset exceeds a predetermined threshold
- When the predicted value of the cell quality of the neighboring cell + AIML_offset is larger than the predicted value or the actual measurement value of the cell quality of the SpCell by a predetermined value or more
- When the predicted value of the cell quality of the SpCell + AIML_offset falls below a predetermined threshold (first threshold) and the predicted value of the cell quality of the neighboring cell + AIML_offset exceeds a predetermined threshold (second threshold)
- When the predicted value of the Inter RAT neighboring cell + AIML_offset exceeds a predetermined threshold
- When the predicted value of the cell quality of the PCell + AIML_offset falls below a predetermined threshold (first threshold) and the predicted value of the cell quality of the Inter RAT neighboring cell + AIML_offset exceeds a predetermined threshold (second threshold)

Further, in the HO condition described above, not only AIML_offset but also AIML_hysteresis may be added. AIML_hysteresis may be interpreted as a hysteresis value having a smaller variation amount than the offset value described above. Further, AIML_hysteresis may be calculated by the UE 200 using a learning model, similarly to the offset value described above. Furthermore, AIML_offset may be added to the predetermined threshold instead of the predicted value, and compared. Also, similar to the predicted value, the predetermined threshold may be predicted by the UE 200 using a learning model.

Further, the UE 200 may predict an execution timing of the autonomous HO using a learning model. The execution timing is, for example, a specific time (for example, 10:50:12) or a period (for example, a time interval such as 10:50:12 to 10:51:12). The UE 200 may execute the autonomous HO at the predicted execution timing. Further, the gNB 100 may predict the execution timing using a learning model, and configure the UE 200 to execute the autonomous HO at the predicted execution timing by RRC, MAC CE, DCI, or the like.

Note that AIML_offset may be configured by AIML measurement config, similarly to Operation Example 1. For example, it may be configured in measObject. On the other hand, AIML_offset may be configured by CHO/CPAC/LTM preparation or RRCReconfiguration shown in Fig. 7. Further, AIML_offset may be configured to be different for each UE 200. Furthermore, AIML_offset may take into account the possibility of changing over time. That is, the UE 200 may predict a temporal change of AIML_offset using a learning model, and change AIML_offset based on this prediction. Further, the gNB 100 may predict a temporal change of AIML_offset using a learning model, and configure a change pattern of AIML_offset to the UE 200 based on this prediction.

### (3.2.3) Operation Example 3

Operation Example 3 will be described with reference to Figs. 6 to 8. Operation Example 3 defines in more detail the transmission timing of the measurement report and the content of the measurement report described in Operation Example 1, and the execution timing of the autonomous HO described in Operation Example 2.

### (Content of Measurement Report)

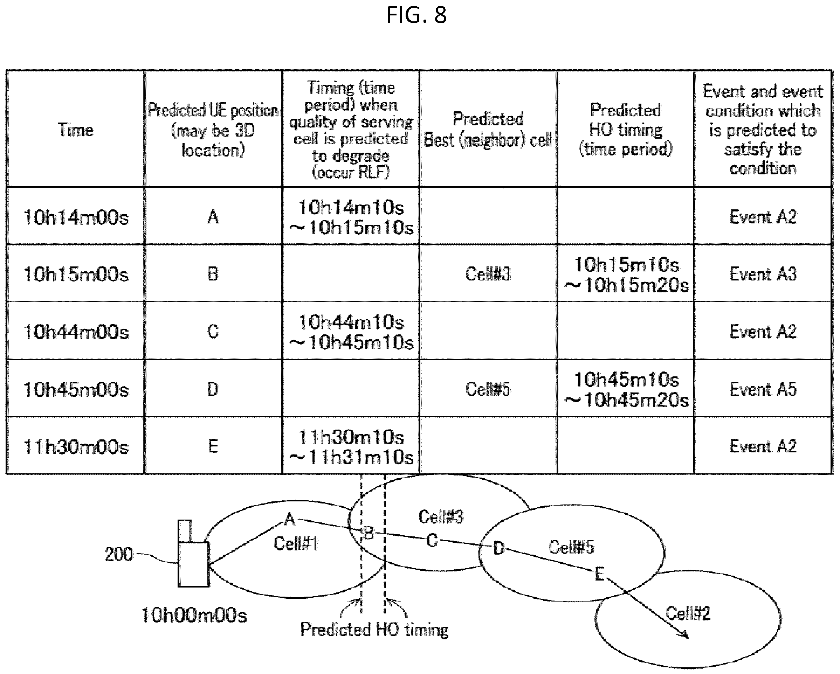

- Timestamp or time window in which the event condition described in Operation Example 1 is satisfied
- At least one of predicted location information of the UE 200 (may be 3D location), a timing (time interval) at which cell quality of the serving cell is predicted to degrade (deteriorate), a neighboring cell predicted to have the best cell quality, a predicted execution timing (time interval) of the HO, and an event predicted to satisfy the condition or the event condition, as shown in Fig. 8.

### (Transmission Timing of Measurement Report, Execution Timing of HO)

- Immediately after the predicted value of the cell quality (AIML inference value of RRM) satisfies a predetermined event condition
- An execution timing of the HO (for example, a specific time such as 10:50:12, or a time interval such as 10:50:12 to 10:51:12) may be predicted using a learning model. Further, x seconds before the predicted execution timing of the HO may be regarded as the transmission timing of the measurement report. In other words, the transmission timing of the measurement report may be predicted based on the predicted execution timing of the HO. Note that the prediction using the learning model may be performed by the UE 200 or the gNB 100. When the UE 200 predicts using the learning model, the above-mentioned x seconds may be included in the content of the measurement report and reported to the gNB 100. When the gNB 100 predicts using the learning model, the above-mentioned x seconds may be configured to the UE 200 by AIML measurement config (see Fig. 6).
- Similarly, the transmission timing of the measurement report may be predicted, and x seconds after the predicted transmission timing of the measurement report may be regarded as the execution timing of the HO. In other words, the execution timing of the HO may be predicted based on the predicted transmission timing of the measurement report.
- The above-mentioned x seconds may be changed according to the moving speed of the UE 200. For example, when the UE 200 moves at a high speed, x may be decreased, and when the UE 200 moves at a low speed, x may be increased.

### (4) Operation and Effects

According to the above-described embodiment, it is possible to improve prediction accuracy of the transmission timing of the measurement report or the execution timing of the autonomous HO by combining a plurality of predictions.

### (5) Other Embodiments

Although the contents of the present invention have been described based on the embodiments, the present invention is not limited to these descriptions, and it is obvious to those skilled in the art that various modifications and improvements are possible.

The above-described operation examples may be combined and applied in a composite manner as long as no contradiction arises.

In the above-described disclosure, it is assumed that one general-purpose learning model is used, but the present invention is not limited to this. Different learning models may be used according to the content to be predicted.

The block diagrams used for the description of the above embodiments represent blocks of functional units. These functional blocks (components) are implemented by any combination of at least one of hardware and software. The method of implementing each functional block is not particularly limited. That is, each functional block may be implemented using one physically or logically combined device, or may be implemented by connecting two or more physically or logically separated devices directly or indirectly (for example, using a wired line, a wireless line, etc.) and using these plurality of devices. The functional block may be implemented by combining software with the one device or the plurality of devices.

The function includes, but is not limited to, judging, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning. For example, a functional block (component) that functions transmission is called a transmitting unit or a transmitter. In any case, as described above, the implementation method is not particularly limited.

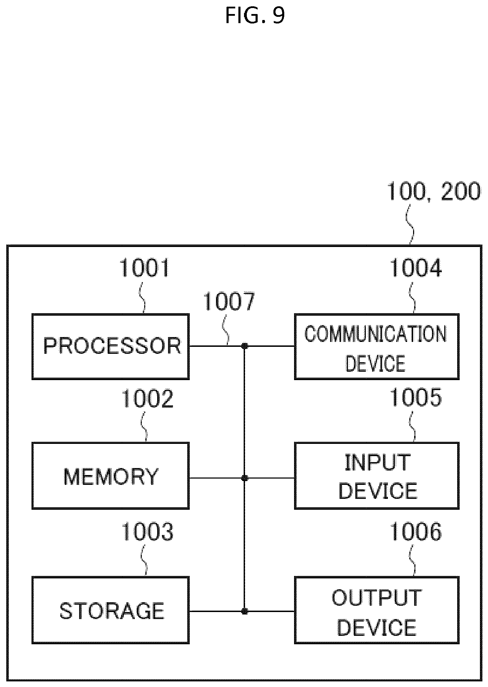

For example, the base station 100, the terminal 200, and the like in one embodiment of the present disclosure may function as a computer that performs the processing of the radio communication method of the present disclosure. Fig. 9 is a diagram showing an example of a hardware configuration of the base station 100 and the terminal 200 according to one embodiment of the present disclosure. The base station 100 and the terminal 200 described above may be physically configured as a computer device including a processor 1001, a memory 1002, a storage 1003, a communication device 1004, an input device 1005, an output device 1006, a bus 1007, and the like.

Note that in the following description, the term "device" can be read as a circuit, a device, a unit, and the like. The hardware configuration of the base station 100 and the terminal 200 may be configured to include one or a plurality of the devices shown in the figure, or may be configured not to include some of the devices.

Each function in the base station 100 and the terminal 200 is realized by reading predetermined software (program) onto hardware such as the processor 1001 and the memory 1002, and by the processor 1001 performing calculation to control communication by the communication device 1004, or to control at least one of reading and writing of data in the memory 1002 and the storage 1003.

The processor 1001 operates, for example, an operating system to control the entire computer. The processor 1001 may be composed of a Central Processing Unit (CPU) including an interface with peripheral devices, a control device, a calculation device, a register, and the like.

Further, the processor 1001 reads a program (program code), a software module, data, and the like from at least one of the storage 1003 and the communication device 1004 into the memory 1002, and executes various processes according to these. As the program, a program that causes a computer to execute at least a part of the operations described in the above embodiments is used. Furthermore, although it has been described that the various processes described above are executed by one processor 1001, they may be executed simultaneously or sequentially by two or more processors 1001. The processor 1001 may be implemented by one or more chips. Note that the program may be transmitted from a network via a telecommunication line.

The memory 1002 is a computer-readable recording medium, and may be composed of at least one of, for example, a Read Only Memory (ROM), an Erasable Programmable ROM (EPROM), an Electrically Erasable Programmable ROM (EEPROM), a Random Access Memory (RAM), and the like. The memory 1002 may be called a register, a cache, a main memory (main storage device), and the like. The memory 1002 can store a program (program code), a software module, and the like executable for carrying out the radio communication method according to one embodiment of the present disclosure.

The storage 1003 is a computer-readable recording medium, and may be composed of at least one of, for example, an optical disk such as a Compact Disc ROM (CD-ROM), a hard disk drive, a flexible disk, a magneto-optical disk (for example, a compact disk, a digital versatile disk, a Bluray (registered trademark) disk), a smart card, a flash memory (for example, a card, a stick, a key drive), a floppy (registered trademark) disk, a magnetic strip, and the like. The storage 1003 may be called an auxiliary storage device. The above-described storage medium may be, for example, a database, a server, or other appropriate media including at least one of the memory 1002 and the storage 1003.

The communication device 1004 is hardware (transmitting/receiving device) for performing communication between computers via at least one of a wired network and a wireless network, and is also called, for example, a network device, a network controller, a network card, a communication module, and the like. The communication device 1004 may be configured to include a high-frequency switch, a duplexer, a filter, a frequency synthesizer, and the like, for example, in order to realize at least one of Frequency Division Duplex (FDD) and Time Division Duplex (TDD).

The input device 1005 is an input device (for example, a keyboard, a mouse, a microphone, a switch, a button, a sensor, etc.) that accepts input from the outside. The output device 1006 is an output device (for example, a display, a speaker, an LED lamp, etc.) that performs output to the outside. Note that the input device 1005 and the output device 1006 may have an integrated configuration (for example, a touch panel).

Further, each device such as the processor 1001 and the memory 1002 is connected by a bus 1007 for communicating information. The bus 1007 may be configured using a single bus, or may be configured using a different bus for each device.

Further, the base station 100 and the terminal 200 may be configured to include hardware such as a microprocessor, a Digital Signal Processor (DSP), an Application Specific Integrated Circuit (ASIC), a Programmable Logic Device (PLD), and a Field Programmable Gate Array (FPGA), and a part or all of each functional block may be realized by the hardware. For example, the processor 1001 may be implemented using at least one of these hardwares.

The notification of information is not limited to the aspects/embodiments described in the present disclosure, and may be performed using other methods. For example, the notification of information may be performed by physical layer signaling (for example, Downlink Control Information (DCI), Uplink Control Information (UCI)), higher layer signaling (for example, Radio Resource Control (RRC) signaling, Medium Access Control (MAC) signaling), broadcast information (Master Information Block (MIB), System Information Block (SIB)), other signals, or a combination thereof. Further, the RRC signaling may be called an RRC message, and may be, for example, an RRC Connection Setup message, an RRC Connection Reconfiguration message, and the like.

Each aspect/embodiment described in the present disclosure may be applied to a system using at least one of Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (x is, for example, an integer or a decimal), Future Radio Access (FRA), New Radio (NR), New radio access (NX), Future generation radio access (FX), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and a next generation system extended, modified, created, or defined based on these. Further, a plurality of systems may be combined (for example, a combination of at least one of LTE and LTE-A with 5G, etc.) and applied.

The processing procedures, sequences, flowcharts, and the like of each aspect/embodiment described in the present disclosure may be reordered as long as there is no contradiction. For example, regarding the methods described in the present disclosure, elements of various steps are presented using an illustrative order, and are not limited to the presented specific order.

The specific operation performed by the base station in the present disclosure may be performed by its upper node in some cases. In a network consisting of one or a plurality of network nodes having a base station, it is obvious that various operations performed for communication with a terminal can be performed by at least one of the base station and other network nodes other than the base station (for example, MME or S-GW are conceivable, but not limited thereto). Although the case where there is one other network node other than the base station has been illustrated above, it may be a combination of a plurality of other network nodes (for example, MME and S-GW).

Information, signals (information, etc.) can be output from a higher layer (or a lower layer) to a lower layer (or a higher layer). They may be input and output via a plurality of network nodes.

Input and output information, etc. may be stored in a specific place (for example, a memory), or may be managed using a management table. Input and output information, etc. may be overwritten, updated, or appended. Output information, etc. may be deleted. Input information, etc. may be transmitted to another device.

The determination may be performed by a value represented by 1 bit (0 or 1), may be performed by a Boolean value (true or false), or may be performed by comparison of numerical values (for example, comparison with a predetermined value).

Each aspect/embodiment described in the present disclosure may be used alone, may be used in combination, or may be used by switching according to execution. Further, the notification of predetermined information (for example, notification of "being X") is not limited to being performed explicitly, and may be performed implicitly (for example, not performing notification of the predetermined information).

Software should be broadly interpreted to mean instructions, instruction sets, codes, code segments, program codes, programs, subprograms, software modules, applications, software applications, software packages, routines, subroutines, objects, executable files, execution threads, procedures, functions, and the like, regardless of whether it is called software, firmware, middleware, microcode, hardware description language, or other names.

Further, software, instructions, information, and the like may be transmitted and received via a transmission medium. For example, when software is transmitted from a website, a server, or other remote sources using at least one of wired technologies (coaxial cable, optical fiber cable, twisted pair, Digital Subscriber Line (DSL), etc.) and wireless technologies (infrared, microwave, etc.), at least one of these wired technologies and wireless technologies is included within the definition of the transmission medium.

Information, signals, and the like described in the present disclosure may be represented using any of a variety of different technologies. For example, data, instructions, commands, information, signals, bits, symbols, chips, and the like that may be referred to throughout the above description may be represented by voltages, currents, electromagnetic waves, magnetic fields or magnetic particles, optical fields or photons, or any combination thereof.

Note that terms described in the present disclosure and terms necessary for understanding the present disclosure may be replaced with terms having the same or similar meanings. For example, at least one of a channel and a symbol may be a signal (signaling). Also, a signal may be a message. Further, a Component Carrier (CC) may be called a carrier frequency, a cell, a frequency carrier, and the like.

The terms "system" and "network" used in the present disclosure are used interchangeably.

Further, information, parameters, and the like described in the present disclosure may be represented using absolute values, may be represented using relative values from predetermined values, or may be represented using other corresponding information. For example, radio resources may be indicated by an index.

The names used for the parameters described above are not limiting names in any respect. Furthermore, mathematical formulas and the like using these parameters may differ from those explicitly disclosed in the present disclosure. Since various channels (for example, PUCCH, PDCCH, etc.) and information elements can be identified by any suitable names, the various names assigned to these various channels and information elements are not limiting names in any respect.

In the present disclosure, terms such as "Base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. The base station may be called by terms such as a macro cell, a small cell, a femto cell, and a pico cell.

The base station can accommodate one or a plurality of (for example, three) cells (also called sectors). When the base station accommodates a plurality of cells, the entire coverage area of the base station can be divided into a plurality of smaller areas, and each smaller area can also provide communication services by a base station subsystem (for example, a compact base station for indoor use (Remote Radio Head, RRH)). The term "cell" or "sector" refers to a part or the whole of the coverage area of at least one of the base station and the base station subsystem that performs communication services in this coverage.

In the present disclosure, the base station transmitting information to the terminal may be read as the base station instructing the terminal to perform control/operation based on the information.

In the present disclosure, terms such as "terminal", "user terminal", "Mobile Station (MS)", and "User Equipment (UE)" can be used interchangeably.

The mobile station may be called by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be called a transmitting device, a receiving device, a communication device, and the like. Note that at least one of the base station and the mobile station may be a device mounted on a moving body, the moving body itself, and the like. The moving body refers to an object that can move, and the moving speed is arbitrary. It also naturally includes cases where the moving body is stopped. The moving body includes, for example, but is not limited to, a vehicle, a transport vehicle, an automobile, a motorcycle, a bicycle, a connected car, an excavator, a bulldozer, a wheel loader, a dump truck, a forklift, a train, a bus, a rear car, a rickshaw, a ship (ship and other watercraft), an airplane, a rocket, a satellite, a drone (registered trademark), a multicopter, a quadcopter, a balloon, and objects mounted thereon. Further, the moving body may be a moving body that travels autonomously based on an operation command. It may be a vehicle (for example, a car, an airplane, etc.), an unmanned moving body (for example, a drone, an autonomous driving car, etc.), or a robot (manned type or unmanned type). Note that at least one of the base station and the mobile station also includes a device that does not necessarily move during communication operation. For example, at least one of the base station and the mobile station may be an Internet of Things (IoT) device such as a sensor.

Further, the base station in the present disclosure may be read as a terminal. For example, each aspect/embodiment of the present disclosure may be applied to a configuration in which communication between a base station and a terminal is replaced with communication between a plurality of terminals (for example, may be called Device-to-Device (D2D), Vehicle-to-Everything (V2X), etc.). In this case, the terminal 200 may have the functions of the base station 100 described above. Further, terms such as "uplink" and "downlink" may be read as terms corresponding to terminal-to-terminal communication (for example, "side"). For example, an uplink channel, a downlink channel, and the like may be read as a side channel.

Similarly, the terminal in the present disclosure may be read as a base station. In this case, the base station 100 may have the functions of the terminal 200 described above.

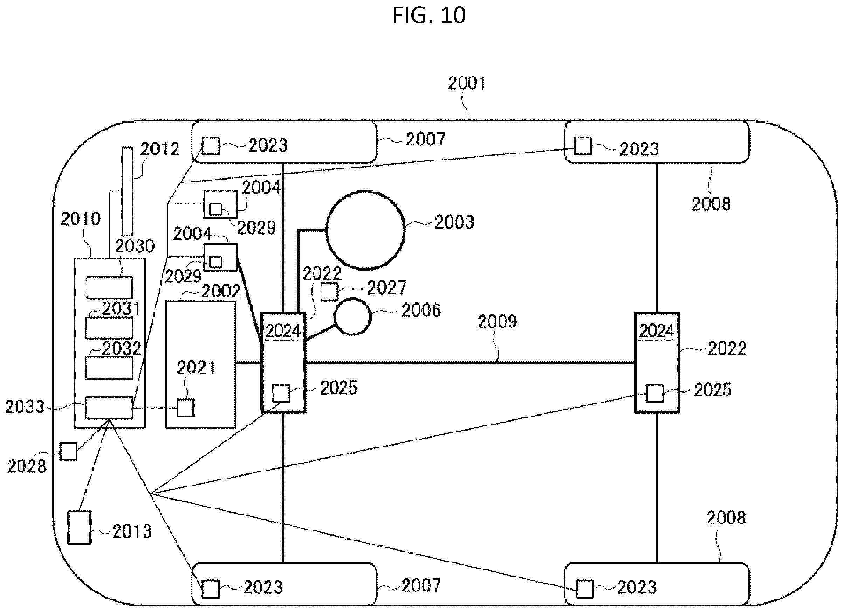

Fig. 10 shows a configuration example of a vehicle 2001. As shown in Fig. 10, the vehicle 2001 comprises a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 is composed of, for example, an engine, a motor, or a hybrid of an engine and a motor.

The steering unit 2003 includes at least a steering wheel (also called a handle), and is configured to steer at least one of the front wheels and the rear wheels based on an operation of the steering wheel operated by a user.

The electronic control unit 2010 is composed of a microprocessor 2031, a memory (ROM, RAM) 2032, and a communication port (IO port) 2033. Signals from the various sensors 2021 to 2027 provided in the vehicle are input to the electronic control unit 2010. The electronic control unit 2010 may be called an Electronic Control Unit (ECU).

Signals from the various sensors 2021 to 2029 include a current signal from a current sensor 2021 that senses a current of the motor, a rotation speed signal of the front wheels or the rear wheels acquired by a rotation speed sensor 2022, an air pressure signal of the front wheels or the rear wheels acquired by an air pressure sensor 2023, a vehicle speed signal acquired by a vehicle speed sensor 2024, an acceleration signal acquired by an acceleration sensor 2025, a depression amount signal of the accelerator pedal acquired by an accelerator pedal sensor 2029, a depression amount signal of the brake pedal acquired by a brake pedal sensor 2026, an operation signal of the shift lever acquired by a shift lever sensor 2027, a detection signal for detecting an obstacle, a vehicle, a pedestrian, and the like acquired by an object detection sensor 2028, and the like.

The information service unit 2012 is composed of various devices for providing (outputting) various information such as driving information, traffic information, and entertainment information, such as a car navigation system, an audio system, a speaker, a television, and a radio, and one or more ECUs that control these devices. The information service unit 2012 provides various multimedia information and multimedia services to an occupant of the vehicle 2001 by using information acquired from an external device via the communication module 2013 or the like.

The information service unit 2012 may include an input device (for example, a keyboard, a mouse, a microphone, a switch, a button, a sensor, a touch panel, etc.) that accepts input from the outside, or may include an output device (for example, a display, a speaker, an LED lamp, a touch panel, etc.) that performs output to the outside.

A driver assistance system unit 2030 is composed of various devices for providing functions for preventing accidents in advance or reducing a driving load of a driver, such as a millimeter wave radar, Light Detection and Ranging (LiDAR), a camera, a positioning locator (for example, GNSS, etc.), map information (for example, High Definition (HD) map, Autonomous Vehicle (AV) map, etc.), a gyro system (for example, Inertial Measurement Unit (IMU), Inertial Navigation System (INS), etc.), an Artificial Intelligence (AI) chip, and an AI processor, and one or more ECUs that control these devices. Further, the driver assistance system unit 2030 transmits and receives various information via the communication module 2013 to realize a driver assistance function or an automated driving function.

The communication module 2013 can communicate with the microprocessor 2031 and components of the vehicle 2001 via the communication port. For example, the communication module 2013 transmits and receives data to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and the sensors 2021 to 2029 provided in the vehicle 2001 via the communication port 2033.

The communication module 2013 is a communication device capable of being controlled by the microprocessor 2031 of the electronic control unit 2010 and communicating with an external device. For example, it transmits and receives various information to and from an external device via radio communication. The communication module 2013 may be inside or outside the electronic control unit 2010. The external device may be, for example, a base station, a mobile station, or the like.

The communication module 2013 may transmit at least one of the signals from the various sensors 2021 to 2029 described above input to the electronic control unit 2010, information obtained based on the signals, and information based on input from the outside (user) obtained via the information service unit 2012 to an external device via radio communication. The electronic control unit 2010, the various sensors 2021 to 2029, the information service unit 2012, and the like may be called an input unit that accepts input. For example, the PUSCH transmitted by the communication module 2013 may include information based on the input.

The communication module 2013 receives various information (traffic information, signal information, inter-vehicle information, etc.) transmitted from an external device, and displays it on the information service unit 2012 provided in the vehicle. The information service unit 2012 may be called an output unit that outputs information (for example, outputs information to a device such as a display or a speaker based on a PDSCH received by the communication module 2013 (or data/information decoded from the PDSCH)).

Further, the communication module 2013 stores various information received from the external device in the memory 2032 usable by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2029, and the like provided in the vehicle 2001.

The terms "determining" and "deciding" used in the present disclosure may encompass a wide variety of operations. "Determining" and "deciding" may include deeming that judging, calculating, computing, processing, deriving, investigating, looking up, search, inquiry (for example, searching in a table, a database, or another data structure), or ascertaining has been "determined" or "decided". Also, "determining" and "deciding" may include deeming that receiving (for example, receiving information), transmitting (for example, transmitting information), input, output, or accessing (for example, accessing data in a memory) has been "determined" or "decided". Also, "determining" and "deciding" may include deeming that resolving, selecting, choosing, establishing, comparing, or the like has been "determined" or "decided". That is, "determining" and "deciding" may include deeming that some operation has been "determined" or "decided". Also, "determining (deciding)" may be read as "assuming", "expecting", "considering", and the like.

The terms "connected", "coupled", or any variation thereof mean any direct or indirect connection or coupling between two or more elements, and can include the presence of one or more intermediate elements between two elements that are "connected" or "coupled" to each other. The coupling or connection between elements may be physical, logical, or a combination thereof. For example, "connection" may be read as "access". As used in the present disclosure, two elements can be considered to be "connected" or "coupled" to each other using at least one of one or more wires, cables, and printed electrical connections, and as some non-limiting and non-inclusive examples, using electromagnetic energy having wavelengths in the radio frequency region, the microwave region, and the light (both visible and invisible) region, and the like.

The Reference Signal may be abbreviated as RS, and may be called a Pilot according to the applied standard.

The description "based on" used in the present disclosure does not mean "based only on" unless otherwise explicitly stated. In other words, the description "based on" means both "based only on" and "based at least on".

Any reference to elements using designations such as "first", "second", and the like used in the present disclosure does not generally limit the quantity or order of those elements. These designations can be used in the present disclosure as a convenient method for distinguishing between two or more elements. Therefore, references to the first and second elements do not mean that only two elements can be adopted, or that the first element must precede the second element in some way.

The "means" in the configuration of each of the above devices may be replaced with "unit", "circuit", "device", and the like.

When "include", "including", and variations thereof are used in the present disclosure, these terms are intended to be inclusive, similar to the term "comprising". Furthermore, the term "or" used in the present disclosure is intended not to be an exclusive-OR.

A radio frame may be composed of one or a plurality of frames in the time domain. Each of the one or plurality of frames in the time domain may be called a subframe. A subframe may be further composed of one or a plurality of slots in the time domain. A subframe may be a fixed time length (for example, 1 ms) independent of numerology.

Numerology may be a communication parameter applied to at least one of transmission and reception of a certain signal or channel. Numerology may indicate at least one of, for example, SubCarrier Spacing (SCS), bandwidth, symbol length, cyclic prefix length, Transmission Time Interval (TTI), the number of symbols per TTI, radio frame configuration, specific filtering processing performed by a transceiver in the frequency domain, specific windowing processing performed by a transceiver in the time domain, and the like.

A slot may be composed of one or a plurality of symbols (Orthogonal Frequency Division Multiplexing (OFDM) symbols, Single Carrier Frequency Division Multiple Access (SC-FDMA) symbols, etc.) in the time domain. A slot may be a time unit based on numerology.

A slot may include a plurality of mini-slots. Each mini-slot may be composed of one or a plurality of symbols in the time domain. Also, a mini-slot may be called a sub-slot. A mini-slot may be composed of fewer symbols than a slot. A PDSCH (or PUSCH) transmitted in a time unit larger than a mini-slot may be called PDSCH (or PUSCH) mapping type A. A PDSCH (or PUSCH) transmitted using a mini-slot may be called PDSCH (or PUSCH) mapping type B.

A radio frame, a subframe, a slot, a mini-slot, and a symbol all represent a time unit when transmitting a signal. A radio frame, a subframe, a slot, a mini-slot, and a symbol may each be called by other corresponding names.

For example, one subframe may be called a Transmission Time Interval (TTI), a plurality of consecutive subframes may be called a TTI, or one slot or one mini-slot may be called a TTI.

That is, at least one of the subframe and the TTI may be a subframe (1 ms) in existing LTE, may be a period shorter than 1 ms (for example, 1 to 13 symbols), or may be a period longer than 1 ms. Note that the unit representing the TTI may be called a slot, a mini-slot, or the like instead of a subframe.

Here, TTI refers to, for example, a minimum time unit of scheduling in radio communication. For example, in the LTE system, the base station performs scheduling to allocate radio resources (frequency bandwidth, transmission power, etc. usable in each terminal) to each terminal in units of TTI. Note that the definition of TTI is not limited to this.

The TTI may be a transmission time unit of a channel-coded data packet (transport block), code block, codeword, or the like, or may be a processing unit of scheduling, link adaptation, or the like. Note that when a TTI is given, a time interval (for example, the number of symbols) in which a transport block, a code block, a codeword, or the like is actually mapped may be shorter than the TTI.

Note that when one slot or one mini-slot is called a TTI, one or more TTIs (that is, one or more slots or one or more mini-slots) may be the minimum time unit of scheduling. Also, the number of slots (the number of mini-slots) constituting the minimum time unit of scheduling may be controlled.

A TTI having a time length of 1 ms may be called a normal TTI (TTI in LTE Rel. 8 to 12), a normal TTI, a long TTI, a normal subframe, a normal subframe, a long subframe, a slot, and the like. A TTI shorter than the normal TTI may be called a shortened TTI, a short TTI, a partial or fractional TTI, a shortened subframe, a short subframe, a mini-slot, a sub-slot, a slot, and the like.

Note that a long TTI (for example, a normal TTI, a subframe, etc.) may be replaced with a TTI having a time length exceeding 1 ms, and a short TTI (for example, a shortened TTI, etc.) may be replaced with a TTI having a TTI length less than the TTI length of the long TTI and 1 ms or more.

A Resource Block (RB) is a resource allocation unit in the time domain and the frequency domain, and may include one or a plurality of consecutive subcarriers in the frequency domain. The number of subcarriers included in an RB may be the same regardless of numerology, and may be, for example, 12. The number of subcarriers included in an RB may be determined based on numerology.

Also, the time domain of an RB may include one or a plurality of symbols, and may be a length of one slot, one mini-slot, one subframe, or one TTI. One TTI, one subframe, and the like may each be composed of one or a plurality of resource blocks.

Note that one or a plurality of RBs may be called a Physical Resource Block (Physical RB, PRB), a Sub-Carrier Group (SCG), a Resource Element Group (REG), a PRB pair, an RB pair, and the like.

Also, a resource block may be composed of one or a plurality of Resource Elements (RE). For example, one RE may be a radio resource region of one subcarrier and one symbol.

A Bandwidth Part (BWP) (may be called a partial bandwidth, etc.) may represent a subset of consecutive common resource blocks (common RBs) for a certain numerology in a certain carrier. Here, the common RB may be identified by an index of the RB based on a common reference point of the carrier. A PRB may be defined in a certain BWP and numbered within the BWP.

The BWP may include a BWP for UL (UL BWP) and a BWP for DL (DL BWP). One or a plurality of BWPs may be configured for a UE within one carrier.

At least one of the configured BWPs may be active, and the UE does not have to assume transmission and reception of a predetermined signal/channel outside the active BWP. Note that "cell", "carrier", and the like in the present disclosure may be read as "BWP".

The structures of the radio frame, subframe, slot, mini-slot, symbol, and the like described above are merely examples. For example, configurations such as the number of subframes included in a radio frame, the number of slots per subframe or radio frame, the number of mini-slots included in a slot, the number of symbols and RBs included in a slot or a mini-slot, the number of subcarriers included in an RB, and the number of symbols, symbol length, Cyclic Prefix (CP) length, and the like in a TTI can be changed variously.

The "maximum transmission power" described in the present disclosure may mean a maximum value of transmission power, may mean the nominal UE maximum transmit power, or may mean the rated UE maximum transmit power.

In the present disclosure, when an article is added by translation, for example, a, an, and the like in English, the present disclosure may include that the noun following these articles is plural.

In the present disclosure, the term "A and B are different" may mean "A and B are different from each other". Note that the term may mean "A and B are each different from C". Terms such as "separated", "coupled", and the like may also be interpreted similarly to "different".

Although the present disclosure has been described in detail above, it is obvious to those skilled in the art that the present disclosure is not limited to the embodiments described in the present disclosure. The present disclosure can be implemented as modified and changed aspects without departing from the spirit and scope of the present disclosure defined by the description of the claims. Therefore, the description of the present disclosure is for the purpose of illustrative explanation, and does not have any limiting meaning to the present disclosure.

### (Supplementary Note)

The above-described disclosure may be expressed as follows.

A first feature is a terminal comprising: a transmission unit that transmits a measurement report related to cell quality; and a control unit that predicts a transmission timing for transmitting the measurement report and an execution timing for executing an autonomous handover using a learning model, wherein the control unit predicts either the transmission timing or the execution timing based on one of the transmission timing or the execution timing.

A second feature is the terminal according to the first feature, wherein the control unit predicts the transmission timing or the execution timing based on a moving speed of the terminal.

A third feature is the terminal according to the first feature or the second feature, wherein the transmission unit transmits the measurement report together with information related to a time or a period of the execution timing.

A fourth feature is the terminal according to any one of the first to third features, wherein the control unit predicts location information of the terminal using the learning model, and the transmission unit transmits the measurement report together with the location information.

A fifth feature is the terminal according to any one of the first to fourth features, wherein the control unit predicts a degradation timing at which the cell quality degrades using the learning model, and the transmission unit transmits the measurement report together with the degradation timing.

A sixth feature is the terminal according to any one of the first to fifth features, wherein the control unit predicts an event condition for executing the handover using the learning model, and the transmission unit transmits the measurement report together with the event condition.

### DESCRIPTION OF REFERENCE NUMERALS

10 Radio communication system
20 NG-RAN
100 Base station
110 Radio signal transmission/reception unit
120 Control unit
200 Terminal
210 Radio signal transmission/reception unit
220 Amplifier unit
230 Modulation and demodulation unit
240 Control signal/reference signal processing unit
250 Encoding/decoding unit
260 Data transmission and reception unit
270 Control unit
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Rotation speed sensor
2023 Air pressure sensor
2024 Vehicle speed sensor
2025 Acceleration sensor
2026 Brake pedal sensor
2027 Shift lever sensor
2028 Object detection sensor
2029 Accelerator pedal sensor
2030 Driver assistance system unit
2031 Microprocessor
2032 Memory (ROM, RAM)
2033 Communication port (IO port)

## Claims

1. A terminal comprising:
a transmission unit that transmits a measurement report related to cell quality; and
a control unit that predicts a transmission timing for transmitting the measurement report and an execution timing for executing an autonomous handover using a learning model, wherein
the control unit predicts either the transmission timing or the execution timing based on one of the transmission timing or the execution timing.

2. The terminal according to claim 1, wherein the control unit predicts the transmission timing or the execution timing based on a moving speed of the terminal.

3. The terminal according to claim 1, wherein the transmission unit transmits the measurement report together with information related to a time or a period of the execution timing.

4. The terminal according to claim 1, wherein
the control unit predicts location information of the terminal using the learning model, and
the transmission unit transmits the measurement report together with the location information.

5. The terminal according to claim 1, wherein
the control unit predicts a degradation timing at which the cell quality degrades using the learning model, and
the transmission unit transmits the measurement report together with the degradation timing.

6. The terminal according to claim 1, wherein
the control unit predicts an event condition for executing the handover using the learning model, and
the transmission unit transmits the measurement report together with the event condition.
